# EUROPEAN PATENT SPECIFICATION

(11) **EP 2 572 473 B1**
(45) Date of publication and mention of the grant of the patent: **26.02.2014**
(21) Application number: 11723324.7
(22) Date of filing: 10.05.2011
(51) Int. Cl.: H04L 12/24, H04L 12/26, H04L 12/703

(54) **METHODS AND APPARATUS FOR USE IN AN OPENFLOW NETWORK**
VERFAHREN UND VORRICHTUNG ZUR VERWENDUNG IN EINEM OPENFLOW-NETZWERK
PROCÉDÉS ET APPAREIL DESTINÉS À ÊTRE UTILISÉS DANS UN RÉSEAU OPENFLOW

(30) Priority: 19.05.2010 US 346227 P
(43) Date of publication of application: 27.03.2013
(73) Proprietor: Telefonaktiebolaget L M Ericsson (PUBL), 164 83 Stockholm (SE)
(72) Inventor: BELLAGAMBA, Elisa, S-116 62 Stockholm (SE); KEMPF, James, Mountain View, California 94041 (US); SKÖLDSTRÖM, Pontus, S-164 46 Stockholm (SE)
(74) Representative: Lind, Robert
(86) International application number: PCT/EP2011/057498
(87) International publication number: WO 2011/144495

(56) References cited:
- EP-A1- 1 912 381
- Nick McKeown ET AL: "OpenFlow: Enabling Innovation in Campus Networks", , 14 March 2008 (2008-03-14), pages 1-6, XP55002028, Retrieved from the Internet: URL:http://www.openflow.org/documents/open flow-wp-latest.pdf [retrieved on 2011-07-05]
- Kyriakos Zarifis, Martin Casado: "Mailing List Archives [openflow-discuss] link failure detection", , 11 September 2009 (2009-09-11), pages 1-2, XP002648034, Retrieved from the Internet: URL:https://mailman.stanford.edu/pipermail /openflow-discuss/2009-September/000382.ht ml [retrieved on 2011-07-06]
- BAHADUR N ET AL: "LSP-Ping and BFD encapsulation over ACH; draft-ietf-mpls-tp-lsp-ping- bfd-procedures-00.txt", LSP-PING AND BFD ENCAPSULATION OVER ACH; DRAFT-IETF-MPLS-TP-LSP-PING- BFD-PROCEDURES-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 March 2010 (2010-03-23), pages 1-9, XP015067159, [retrieved on 2010-03-23]

## Description

### Technical Field

The present invention relates to methods and apparatus for use in an OpenFlow network. More particularly, the invention relates to a methods and apparatus for implementing protection switching at an OpenFlow switch.

### Background

Prior art document EP1912381, discloses basic principles of the MPLS TE FRR: An end-to-end Traffic Engineering (TE) tunnel is established between two Provider Edges, (PEs), and a backup Label Switching Path (LSP) is established beforehand for a primary LSP that needs protection. Bidirectional Forwarding Detection (BFD) or tunnel fast convergence, advertises the available/unavailable state information of the tunnel to the forwarding engine.

Prior art document XP55002028, Nick McKeown ET AL "OpenFlow: Enabling Innovation in Campus Networks", discloses the OpenFlow architecture, which is based on an Ethernet switch, with an internal flow-table, and a standardized interface to add and remove flow entries. Most modern Ethernet switches and routers contain flow-tables (typically built from TCAMs) that run at line-rate to implement firewalls, NAT, QoS, and to collect statistics. OpenFlow provides an open protocol to program the flow-table in different switches and routers.

Prior art document XP002648034, Kyriakos Zarifis, Martin Casado "Mailing List Archives [openflow-discuss] link failure detection" (https://mailman.stanford.edu/pipermail/openflow-discuss/2009-September/000382.html), discloses a proposal made by a member of the OpenFlow mailing list to perform BFD link failure detection within the switch so that the control messages are now local to the link, and not produced by the controller, resulting in a much faster detection speed (no RTT) and the notification of the controller is faster since there is only a single trip required.

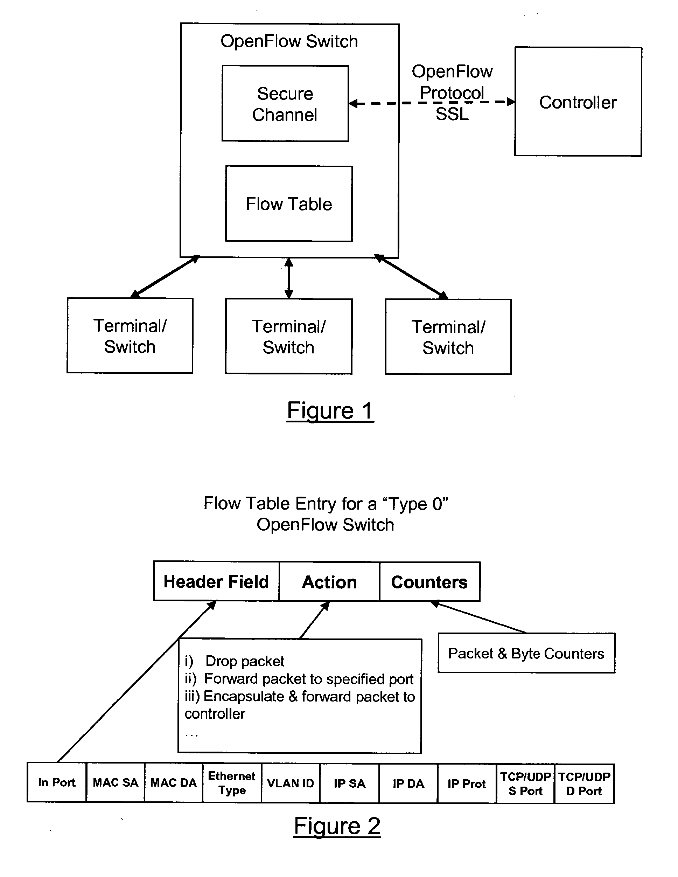

The OpenFlow Switching Protocol is defined by the OpenFlow Switch Consortium in the OpenFlow Switch Specification, and is intended as a way for researchers to run experimental protocols in their networks. OpenFlow is based on an Ethernet switch, with one or more internal flow tables or forwarding tables that perform packet lookup and forwarding, and a secure channel to an external controller, as illustrated in Figure 1. The controller manages the OpenFlow switch over the secure channel using the OpenFlow protocol.

A flow table contains a set of flow entries (i.e. header values that can be used to match against packets), activity counters, and a set of zero or more actions to apply to matching packets. All packets processed by the OpenFlow switch are compared against the flow table. If a matching entry is found, any actions for that entry are performed on the packet (e.g. the action might be to forward a packet on a specified port). If no match is found, the packet is forwarded to the controller over the secure channel. The controller is responsible for determining how to handle packets that do not have valid flow entries, and manages the flow table by adding and removing flow entries.

Figure 2 illustrates an example of a flow table entry. Each flow table entry contains header fields or match fields that are used to match packets, counters that are updated for each matching packet, and actions or instructions that are applied to matching packets. In the example of Figure 2 the header fields include fields from several layers of the protocol stack, such as the Ethernet MAC addresses, IP address, IP protocol, TCP/UDP port numbers as well as the incoming port number. Of course, other header fields can be used in addition to or instead of the fields given in this example. Each entry must contain either a specific value, or a wildcard "ANY" entry, which matches any value. If the switch supports subnet masks on the IP source and/or destination fields, these can more precisely specify matches.

Each flow entry is also associated with zero or more actions that dictate how the OpenFlow switch handles packets that match the header fields of the flow entry. For example, these actions can include, but are not limited to, dropping a packet, forwarding a packet on an outgoing port, forward the packet on the incoming port, forwarding a packet on all outgoing ports, forwarding the packer to the controller etc. If no actions are present in a flow entry, then a packet matching that entry is dropped. A switch is not required to support all action types, as some actions are required actions and others are optional actions. When connecting to the controller, a switch indicates which of the optional actions it supports.

The secure channel is the interface that connects each OpenFlow switch to a controller. Through this interface, the controller configures and manages the switch, receives events from the switch, and sends packets out from the switch. All messages set over the secure channel must be formatted according to the OpenFlow protocol defined in the OpenFlow Switch Specification. The OpenFlow protocol supports three message types, controller-to-switch messages, asynchronous messages, and symmetric messages, each of which has multiple sub-types..

Controller-to-switch messages are initiated by the controller and used to directly manage or inspect the state of the switch. Controller-to-switch messages may or may not require a response from the switch. These include:
■ Features messages: Upon Transport Layer Security (TLS) session establishment, the controller sends a features request message to the switch. The switch must reply with a features reply that species the capabilities supported by the switch.
■ Configuration messages: The controller is able to set and query configuration parameters in the switch. The switch only responds to a query from the controller.
■ Modify-State messages: Modify-State messages are sent by the controller to manage state on the switches. Their primary purpose is to add/delete and modify flows in the flow tables and to set switch port properties.
■ Read-State messages: Read-State messages are used by the controller to collect statistics from the switch's flow-tables, ports and the individual flow entries.
■ Send-Packet messages: These are used by the controller to send packets out of a specified port on the switch.
■ Barrier messages: Barrier request/reply messages are used by the controller to ensure message dependencies have been met or to receive notifications for completed operations.

Asynchronous messages are initiated by the switch and used to update the controller of network events and changes to the switch state. Switches send asynchronous messages to the controller to denote a packet arrival, switch state change, or error. These include:
■ Packet-in messages: For all packets that do not have a matching flow entry, a packet-in event is sent to the controller (or if a packet matches an entry with a "send to controller" action). If the switch has sufficient memory to buffer packets that are sent to the controller, the packet-in events contain some fraction of the packet header and a buffer ID to be used by the controller when it is ready for the switch to forward the packet. Switches that do not support internal buffering (or have run out of internal buffering) must send the full packet to the controller as part of the event.
■ Flow-Removed messages: When a flow entry is added to the switch by a flow modify message, an idle timeout value indicates when the entry should be removed due to a lack of activity, as well as a hard timeout value that indicates when the entry should be removed, regardless of activity. The flow modify message also species whether the switch should send a flow removed message to the controller when the flow expires. Flow modify messages which delete flows may also cause flow removed messages.
■ Port-status messages: The switch is expected to send port-status messages to the controller as port configuration state changes. These events include change in port status (for example, if it was brought down directly by a user) or a change in port status.
■ Error messages: The switch is able to notify the controller of problems using error messages.

Symmetric messages are initiated by either the switch or the controller and sent without solicitation. These include:
■ Hello messages: Hello messages are exchanged between the switch and controller upon connection start-up.
■ Echo messages: Echo request/reply messages can be sent from either the switch or the controller, and must return an echo reply. They can be used to indicate the latency, bandwidth, and/or liveness of a controller-switch connection.
■ Vendor messages: Vendor messages provide a standard way for OpenFlow switches to offer additional functionality within the OpenFlow message space.

Protection switching is a general term referring to functionality for detecting a forwarding path/link failure in a transport network and automatically switching from the failed path/link to an operational link. Protection switching involves two mechanisms:
■ a mechanism for detecting that a failure has occurred in the packet forwarding path; and
■ a mechanism for redirecting traffic affected by the error onto a working forwarding path.
The error detection mechanism typically involves transmitting error-detection packets between network elements, either over a single link or over a multi-hop path. If the receiving node fails to receive a certain number of consecutive error-detection packets, then the forwarding between the network elements is considered broken. The error detection time resolution, i.e. how fast an error is detected, depends on the frequency of error-detection packet transmission and the amount of packets that failed to be forwarded. The transmission frequency is typically an order of magnitude higher than the desired detection time in order to provide a buffer where a few packets may be lost without the failure detection mechanism triggering a false positive. So, for example, if the desired error detection time is 1 second the transmission frequency may be 10 Hz. The traffic redirection mechanism is triggered by the error detection mechanism upon forwarding failure and is responsible for quickly redirecting the traffic affected by the failure onto a working path. This may involve calculating a new path, or switching to a preconfigured path. Typically, in high-performance transport networks, the requirement is a maximum 50 milliseconds for detecting a failure and switching to a working path.

Within the current OpenFlow Switch specification both of the mechanisms required in order to perform protection switching (i.e. failure detection and traffic redirection) have to be implemented in the Controller. Using the Send-Packet and Packet-In functions defined in the OpenFlow protocol, the Controller can instruct an OpenFlow Switch to transmit a packet on a particular forwarding path and can receive a packet from an OpenFlow Switch. If a failure is detected, the Controller can then update the flow table entries to perform the traffic redirection. However, this solution has three major disadvantages:
■ High latency in the protection switching, since the information has to reach the Controller over the Secure Channel. The traffic redirection latency, i.e. the time between failure detection and actual traffic redirection, is high and variable (jitter) since the Controller has to perform the reconfiguration of the forwarding path using the Secure Channel.
■ High load on the Controller, since it has to transmit and receive the failure detection packets, which have to be transmitted at a relatively high frequency for an acceptable failure detection time. Also, the load on the Controller increases roughly linearly with each monitored path, which makes the solution difficult to scale.
■ High risk of false positives in the error detection. Since the Controller is transmitting and receiving the failure detection packets using the Secure Channel, not only is the path between two switches monitored (which is the intention) but also the Secure Channel itself. The Secure Channel may be transported over an arbitrary amount of hops so it its very likely that the failure detection mechanism would trigger on changes in the Secure Channel forwarding, falsely triggering traffic redirection.

### Summary

It is an object of the present invention to overcome, or at least mitigate the problems identified above.

According to a first aspect of the present invention there is provided an apparatus configured to operate as an OpenFlow switch. The apparatus comprises a transmitter for periodically sending outgoing link failure detection packets on one or more links, each link being used to carry traffic to a peer OpenFlow switch, a receiver for receiving incoming link failure detection packets over the one or more links from each peer OpenFlow switch, a link failure detection unit for monitoring the reception of incoming link failure detection packets and for determining that a link has failed if incoming link failure detection packets have not been received on that link for a predefined interval, and a link failover unit for redirecting traffic intended for a failed link to a backup link.

The apparatus may further comprise one or more packet generating virtual ports for generating outgoing link failure detection packets, each packet generating virtual port generating outgoing link failure detection packets with a specified period.

The apparatus may further comprise a flow table configured with a plurality of multicast entries, each multicast entry matching outgoing link failure detection packets with a specified period and identifying a multicast group unit that the matching outgoing link failure detection packets should be sent to, and one or more multicast group units each associated with a multicast group, each multicast group being comprised of one or more links that require outgoing link failure detection packets be sent with the specified period.

Each multicast group unit may be configured to replicate outgoing link failure detection packets generated by a packet generating virtual port such that there is an outgoing link failure detection packet for each of one or more links in the multicast group associated with the multicast group unit.

The apparatus may further comprise a field modifying virtual port for each of the one or more links, the field modifying port inserting link-specific data into one or more fields of the outgoing link failure detection packets.

The apparatus may also further comprise further comprise a link information database for storing the link-specific information relating to each of the one or more links. The information relating to each of the one or more links stored in the link information database may comprise any of:
an identifier for the OpenFlow switch;
an identifier for a peer OpenFlow switch;
one or more identifiers for a link failure detection session between the OpenFlow switch and a peer OpenFlow switch;
the predefined interval for the link failure detection session; and
information identifying the backup link.

The apparatus may further comprise a packet processing unit for identifying incoming link failure detection packets and for forwarding identified incoming link failure detection packets to the link failure detection unit. The link failover unit may be configured to add or modify one or more entries in a flow table in order to redirect traffic intended for a failed link on to a backup link.

The link failure detection packets may be Bidirectional Forwarding Detection, BFD, packets. The one or more links may then be Multi-protocol Label Switching, MPLS, tunnels, and the BFD packets may be carried using the MPLS Transport Profile, MPLS-TP. In this case, the packet generating virtual ports may generate BFD packets with a Generic Associated Channel Label, GAL, and each of the field modifying virtual ports may insert an Associated Channel header, ACH, an ACH Type-Length-Value, TLV, header and one or more ACH TLVs.

The apparatus may further comprise, for each of the one or more MPLS tunnels, an MPLS tunnel ingress virtual port for assigning an MPLS label on to the outgoing BFD packets. The apparatus may also further comprise, for each of the one or more MPLS tunnels, an MPLS tunnel egress virtual port for removing an MPLS label from any incoming packets and for forwarding the incoming packets to a packet processing unit if the incoming packets have a GAL.

The packet processing unit may be configured to determine if an incoming packet is an incoming BFD packet. The flow table may also be configured with a plurality of MPLS tunnel entries, each MPLS tunnel entry matching incoming packets received on a specific MPLS tunnel and identifying the MPLS tunnel egress virtual port that the matching incoming packets should be sent to.

According to a second aspect of the present invention there is provided a method of operating an OpenFlow switch. The method comprises periodically sending outgoing link failure detection packets on one or more links, each link being used to carry traffic to a peer OpenFlow switch, receiving incoming link failure detection packets over the one or more links from each peer OpenFlow switch, monitoring the reception of incoming link failure detection packets, determining that a link has failed if incoming link failure detection packets have not been received on the link for a predefined interval, and redirecting traffic intended for a failed link to a backup link.

The method may further comprise configuring the OpenFlow switch with one or more packet generating virtual ports to generate the outgoing link failure detection packets, each packet generating virtual port generating outgoing link failure detection packets with a specified period.

The method may further comprise configuring the OpenFlow switch with one or more multicast group units each associated with a multicast group, each multicast group being comprised of one or more links that require outgoing link failure detection packets be sent with the specified period. In this case, the method may also further comprise comparing outgoing link failure detection packets to a flow table, the flow table being configured with a plurality of multicast entries, each multicast entry matching outgoing link failure detection packets with a specified period and identifying a multicast group unit, and sending the outgoing link failure detection packets to the multicast group unit identified in the matching multicast entry.

The method may further comprise, at each multicast group unit, replicating outgoing link failure detection packets generated by a packet generating virtual port such that there is an outgoing link failure detection packet for each of one or more links in the multicast group associated with the multicast group unit.

The method may further comprise configuring the OpenFlow switch with a field modifying virtual port for each of the one or more links. In this case, the method may also comprise sending each of the replicated outgoing link failure detection packets to the appropriate field modifying port, and, at the field modifying port, inserting link-specific data into one or more fields of the outgoing link failure detection packets.

According to a third aspect of the present invention there is provided a computer program comprising computer program code means adapted to operate as an OpenFlow switch and to perform the following steps:
periodically send outgoing link failure detection packets on one or more links, each link being used to carry traffic to a peer OpenFlow switch;
receive incoming link failure detection packets over the one or more links from each peer OpenFlow switch;
monitor the reception of incoming link failure detection packets;
determine that a link has failed if incoming link failure detection packets have not been received on the link for a predefined interval; and
redirect traffic intended for a failed link to a backup link.

According to a fourth aspect of the present invention there is provided a computer program as outlined above embodied on a computer readable medium.

According to a fifth aspect of the present invention there is provided a computer system configured to operate as an OpenFlow switch. The computer system comprises a transmitter for periodically sending outgoing link failure detection packets on one or more links, each link being used to carry traffic to a peer OpenFlow switch, a receiver for receiving incoming link failure detection packets over the one or more links from each peer OpenFlow switch, and a processor for monitoring the reception of incoming link failure detection packets, for determining that a link has failed if incoming link failure detection packets have not been received on the link for a predefined interval, and for redirecting traffic intended for a failed link to a backup link.

### Brief Description of the Drawings

Figure 1 illustrates schematically an OpenFlow Switch and Controller;
Figure 2 illustrates an example of a flow table entry;
Figure 3 illustrates the format of a G-ACh packet;
Figure 4 illustrates schematically an Associated Channel transported inside an LSP or MPLS tunnel;
Figure 5 illustrates schematically an OpenFlow Switch according to an embodiment of the present invention;
Figure 6 illustrates schematically a computer system configured to implement the OpenFlow Switch of Figure 5;
Figure 7 is a flow diagram illustrating the process of an OpenFlow switch generating and sending BFD packets;
Figure 8 illustrates an example of a flow matching rule that matches a BFD packet template;

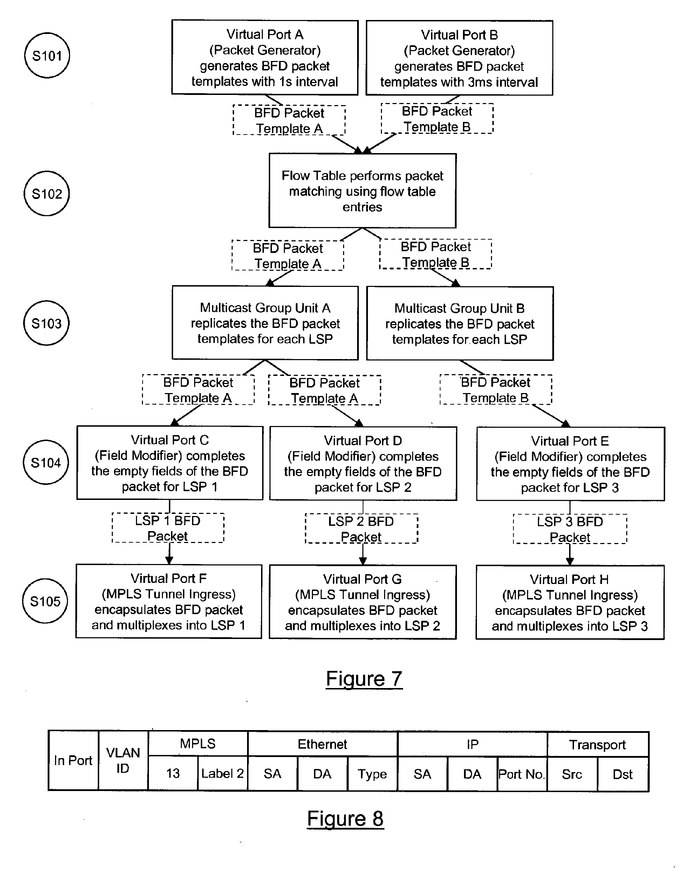

Figure 7 is a flow diagram illustrating the process of an OpenFlow switch receiving and processing BFD packets

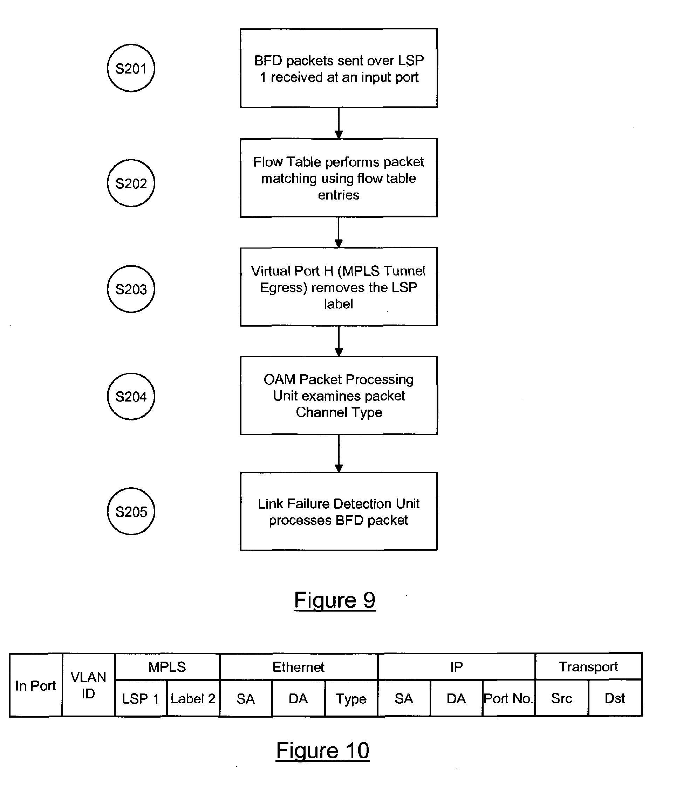

Figure 10 illustrates an example of a flow matching rule that matches a BFD packet.

### Detailed Description

In order to at least partially overcome the problems described above, there will now be described a method of performing failure detection and traffic redirection at an OpenFlow switch in order to implement protection switching. However, the current OpenFlow Switch specification does not provide any mechanism for performing either failure detection or traffic redirection at the switch. In particular, OpenFlow lacks the mechanisms to perform the required packet processing. In the current OpenFlow specification there is support for a very small set of processing actions, such as replacing an IP address or VLAN identifier. However, most of the supported processing involves modifying a packet's existing header fields. Therefore, in order to achieve this protection switching, it is proposed here to extend the concept of virtual/logical ports in order to generate outgoing link failure detection packets, and to terminate incoming link failure detection packets. In particular, it is proposed here to make use of virtual/logical ports to generate outgoing Bidirectional Forwarding Detection (BFD) traffic as link failure detection packets, and to terminate incoming BFD traffic.

A virtual or logical port is a software emulation of a port that normally would be present in hardware. In the context of OpenFlow switches, a virtual port is an "action block" that may be configured to perform a packet processing action. For example, a virtual port may be used to push an Multi-Protocol Label Switching (MPLS) label onto an incoming packet. In order to process an incoming packet, the packet is forwarded to a configured virtual port as if the virtual port was a physical port. When the virtual port has processed the packet it can then be forwarded to the actual physical port. Bidirectional Forwarding Detection (BFD) is a simple "hello" protocol defined in IETF Internet Draft draft-ietf-bfd-base-11. In BFD, a pair of systems transmit BFD packets periodically over each path between the two systems and, if one of the systems stops receiving BFD packets for long enough, some component in that particular bidirectional path to the other system is assumed to have failed. A path is only declared to be operational when two-way communication has been established between the systems, though this does not preclude the use of unidirectional links to support bidirectional paths (co-routed or bidirectional or associated bidirectional).

BFD operates on top of any data protocol (network layer, link layer, tunnels, etc.) being forwarded between two systems, and is always run in a unicast, point-to-point mode. The BFD packets are carried as the payload of whatever encapsulating protocol is appropriate for the medium and network. BFD can provide failure detection on any kind of path between systems, including direct physical links, virtual circuits, tunnels, MPLS LSPs, multi-hop routed paths, and unidirectional links (so long as there is some return path, of course.) Multiple BFD sessions can be established between the same pair of systems when multiple paths between them are present in at least one direction, even if a lesser number of paths are available in the other direction (multiple parallel unidirectional links or MPLS LSPs, for example). It is advantageous to make use of BFD as the BFD protocol agnostic as it can be used to monitor any channel that can encapsulate/decapsulate BFD packets.

In order to implement BFD for an OpenFlow switch, it is proposed here to make use of the Multi-protocol Label Switching (MPLS) Transport Profile (MPLS-TP) in order to enable both IP and non-IP traffic to carry the BFD data.

MPLS is data-carrying mechanism defined in IETF RFC 3031. In an MPLS network, data packets are assigned labels. Packet-forwarding decisions are then made solely on the contents of the label, without the need to examine the packet itself. This enables the creation of end-to-end circuits across any type of transport medium, using any protocol. The primary benefit is to eliminate dependence on a particular Data Link Layer technology, such as ATM, frame relay, SONET or Ethernet, and eliminate the need for multiple Layer 2 networks to satisfy different types of traffic. MPLS works by prefixing packets with an MPLS header, containing one or more labels organized as a last-in, first-out stack. This is called a label stack. These MPLS-labelled packets are switched after a label lookup or label switch instead of a lookup using an IP header.

A Label Switched Path (LSP) is a path through an MPLS network, set up based on criteria in a forwarding equivalence class (FEC). The path begins at a Label Edge Router (LER), which makes a decision on which label to prefix or "push" on to a packet based on the appropriate FEC of the packet. It then forwards the packet along to the next router in the path which forwards the packet to the next router based on the contents of the label. The last router in the path (i.e. a LER) removes or "pops" the label from the packet and forwards the packet based on the header of its next layer, for example IPv4. Due to the forwarding of packets through an LSP being opaque to higher network layers, an LSP is also sometimes referred to as an MPLS tunnel. The router which first prefixes the MPLS header to a packet is called an ingress router. The last router in an LSP, which pops the label from the packet, is called an egress router. The routers in between, which need only swap labels, are called transit routers or Label Switching Routers (LSR). LSPs are unidirectional as they enable a packet to be label switched through the MPLS network from one endpoint to another. Since bidirectional communication is typically desired, an LSP in the other direction can be set-up to compensate for this.

In some applications, the packet presented to an LER may already have a label, such that the new LER pushes a second label onto the packet. When a labelled packet is received by an LSR, the topmost label is examined. Based on the contents of the label a swap, push (impose) or pop (dispose) operation can be performed on the packet's label stack. Routers can have pre-defined lookup tables that tell them which kind of operation should be performed, based on the topmost label of the incoming packet, in order that they can process the packet very quickly.

In a swap operation the label is swapped with a new label, and the packet is forwarded along the path associated with the new label. In a push operation a new label is pushed on top of the existing label, effectively "encapsulating" the packet in another layer of MPLS. This allows hierarchical routing of MPLS packets. Notably, this is used by MPLS VPNs. In a pop operation the label is removed from the packet, which may reveal an inner label below. This process is called "decapsulation". If the popped label was the last on the label stack, the packet "leaves" the MPLS tunnel. This is usually done by the egress LER.

During these operations, the contents of the packet below the MPLS Label stack are not examined. Indeed transit routers typically need only examine the topmost label on the stack. The forwarding of the packet is done based on the contents of the labels, which allows "protocol-independent packet forwarding" that does not need to look at a protocol-dependent routing table and avoids the expensive IP longest prefix match at each hop.

MPLS-TP is a set of MPLS protocols for connection-oriented, packet transport networking that are being defined by the IETF (see, for example, IETF RFC 5654). MPLS-TP is a simplified version of MPLS for transport networks with some of the MPLS functions turned off, and extended where necessary with Operations, Administration and Maintenance (OAM) tools that are widely applied in existing transport network technologies such as SONET/SDH or OTN. It is advantageous to make use of MPLS-TP as MPLS-TP has an OAM channel that can be used for carrying OAM packets.

Two important components of the OAM mechanisms of MPLS-TP are the Generic Associated Channel (G-ACh) and the G-ACh Label (GAL), as defined in IETF RFC 5586. The G-ACh is a generalization of the Associated Channel (ACh) mechanism defined by IETF RFC 4385, and is a container or channel that runs on the LSP and carries OAM signalling. The OAM signalling is achieved by the GAL and subsequent associated OAM message embedded within the Associated Channel header within the payload. The GAL (a reserved MPLS label with value 13) is a label-based exception mechanism that serves to identify to an LSR (or LER) that a packet it receives on an LSP contains an ACH followed by a non-service payload

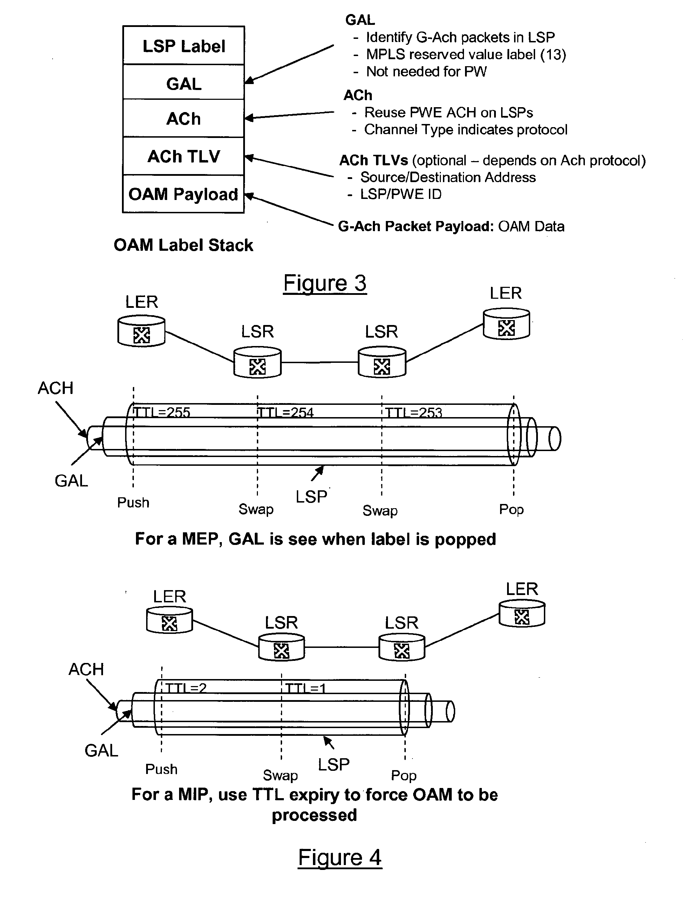

Figure 3 illustrates the format of a G-ACh packet. The packet includes:
■ The LSP label. This MPLS label is used to route the packet over the LSP.
■ The GAL. This MPLS label is used to enable an LER to identify that a packet contains an ACH followed by a non-service payload.
■ The ACh Header (ACH). This identifies that the packet is used for OAM functions.
■ The ACH Type-Length-Value (TLV) Header and one or more ACH TLVs. This layer is optional, and provides additional context information to the G-ACh packet. For example, one use of the ACH TLVs might be to identify the source and/or intended destination of the associated channel message.
■ The G-Ach packet payload. This carries the OAM data.

MPLS-TP OAM operates in the context of Maintenance Entities (MEs) that are a relationship between any two points of a transport path to which maintenance and monitoring operations apply. The collection of one or more MEs that belongs to the same transport path, and that are maintained and monitored as a group, are known as a maintenance entity group (MEG), and the two points that define a maintenance entity are called Maintenance Entity Group (MEG) End Points (MEPs). In between these two points zero or more intermediate points, called Maintenance Entity Group Intermediate Points (MIPs), can exist and can be shared by more than one ME in a MEG. Figure 4 illustrates schematically an Associated Channel transported inside an LSP or MPLS tunnel, in which the MEP is the LER terminating the end-to-end OAM functionality and the MIP is one of the LSRs traversed by the end-to-end OAM functionality. The GAL is exposed at the MEP when the outer label is popped, or at the MIP by the appropriate setting of the TTL fields in the outer label.

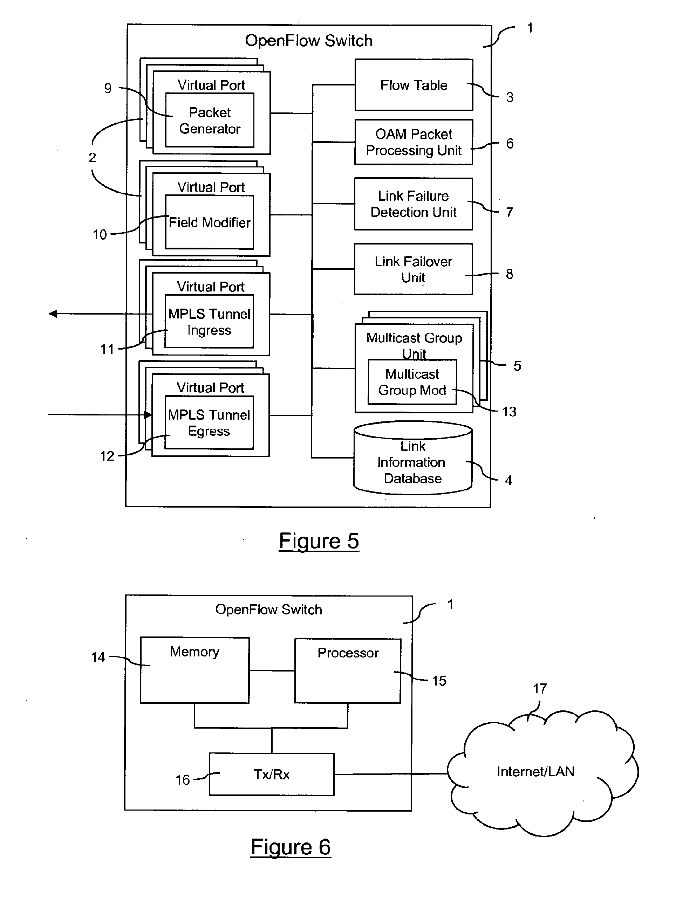

Figure 5 illustrates schematically an OpenFlow switch 1 suitable for implementing protection switching as outlined above. The OpenFlow switch 1 comprises a set of virtual ports 2, a flow table 3 and a link information database 4. The OpenFlow switch 1 also comprises a plurality of multicast group units, 5 a OAM packet processing unit 6, a link failure detection unit 7 and a link failover unit 8. A first subset of the virtual ports are each configured to provide a packet generator function 9, a second subset of the virtual ports are each configured to provide a field modifier function 10, a third subset of the virtual ports are each configured to provide ingress into an MPLS Tunnel/LSP 11, and a fourth subset of the virtual ports are each configured to provide egress out of an MPLS Tunnel/LSP 12.

Each multicast group unit 5 provides a "Multicast Group Mod" function 13. In OpenFlow, a group is used to implement multipath load balancing, multicast, and broadcast forwarding and is defined as a collection of logical ports and a set of weights indicating how traffic should be distributed over each of the ports. The group itself is typically implemented using a logical/virtual port, and a Flow Mod controller command is used to insert a flow matching rule and a corresponding action into the flow table of an OpenFlow switch. The action requires that any packets matching the rule are forwarded to the group logical/virtual port (i.e. one of the multicast group units 5). For packets that are forwarded to the group logical/virtual port, the multicast group unit 5 duplicates the packets and distributes them over the set of logical/virtual ports in the group according to the weights. Two types of group are supported, multipath and multicast. Multicast groups are restricted so as to not forward out of the incoming port. In order to install a group entry, an OpenFlow controller issues a Group Mod command.

The OpenFlow switch of Figure 5 can be implemented as a combination of computer hardware and software, and Figure 6 illustrates schematically a computer system configured to implement such an OpenFlow Switch. The computer system comprises a memory 14, a processor 15, and a transceiver 16. The memory 14 stores the various programs that are implemented by the processor 15, and also provides a storage unit for any required data such as the flow table data, and the link information database 4. The programs files stored in the memory 14, and implemented by the processor 15, include programs implementing the virtual ports 2 and their associated functions, the flow table 3, the multicast group units, 5 the OAM packet processing unit 6, the link failure detection unit 7 and the link failover unit 8. The transceiver 16 is used to communicate with other OpenFlow switches and an OpenFlow controller over a communications network such as the Internet or a LAN 17.

Figure 7 is a flow diagram illustrating the process of an OpenFlow switch generating and sending BFD packets on an MPLS G-Ach control channel. The steps performed are as follows:
S101. A virtual port 2 implementing a packet generator 9 generates BFD packet templates with a pre-configured interval. For example, as illustrated, the packet generator provided by "virtual port A" generates "BFD packet template A" every second, whereas the packet generator of "virtual port B" generates "BFD packet template B" every 3 milliseconds. These BFD packet templates do not yet contain any information related to a particular BFD session. However, the packet generator may fill in the timing fields of the BFD packet (i.e. Desired Min TX Interval, Required Min RX Interval etc), the necessary ACH TLVs, and the GAL MPLS label. The source port field (i.e. "In Port") of the BFD packet template is set to the virtual port number of the packet generator (i.e. the port number of virtual port A or virtual port B).
S102. Once the BFD packet template has been generated it is sent to the flow table 3 for matching. The flow table 3 is configured with a flow matching rule that matches the BFD packet (an example of which is illustrated in Figure 8) and the action defined for that rule requires that the matching packets be forwarded to a multicast group unit 5 that is configured to handle packets with the same generation interval as the packet generator that has generated the packet. For example, "BFD packet template A" is forwarded to the multicast group unit 5 implementing "BFD Multicast Group Mod A", and which has been configured to handle BFD packets generated every second. In contrast, "BFD packet template B" is forwarded to the multicast group unit implementing "BFD Multicast Group Mod B", and which has been configured to handle BFD packets generated every 3 milliseconds. In other words, packets generated by packet generators 9 with different intervals will be forwarded to different Multicast Group Mods 13.
S103. When a multicast group unit 5 receives a BFD packet template, it will replicate the packet template, generating a packet for each LSP of the multicast group. The multicast group unit 5 then forwards each generated packet to a different virtual port, each of which provides a field modifier function 10 for an LSP of the multicast group.
S104. Each of the field modifier 10 virtual ports then fills in those fields of packet that are currently empty. For example, the field modifier 10 virtual ports complete the "My Discriminator" and "Your Discriminator" values that identify the BFD session on the link, and G-ACh TLV fields associated with a particular BFD session. The field modifier virtual 10 ports are each configured with the MEP ID and the number of the virtual port that provide ingress into the associated LSP/MPLS tunnel 11. The MEP-ID is used to do a lookup in the link information database 4, which provides an associative data structure containing all the BFD session information for each link (e.g. including state variables, descriptors, output virtual port number, etc). Once the BFD packet has been completed, the packet is forwarded on to the appropriate MPLS tunnel ingress virtual port 11.
S105. The MPLS tunnel ingress 11 virtual port then treats the BFD packet in the same fashion as incoming user data traffic, such that the BFD packet is encapsulated (i.e. the LSP labels and the GAL label are added to the stack) and multiplexed into the MPLS LSP.

Figure 9 is a flow diagram illustrating the process of an OpenFlow switch receiving BFD Packets on an MPLS G-Ach control channel and the processing of the BFD Packets. The steps performed are as follows:
S201. All incoming BFD packets will enter the switch in the same way as any other packet that is a part of an MPLS LSP. For example, this could involve receiving an MPLS packet at a physical port of the OpenFlow switch, with the physical port then sending the packet to the flow table for matching.
S202. The flow table 3 is configured with a flow matching rule that matches the incoming MPLS packet, carrying the BFD packet in it's Generic Associated channel (an example of which is illustrated in Figure 10), and the action defined for that rule requires that the matching packets be forwarded to an MPLS tunnel egress 12 virtual port. This matching rule is installed for the LSP, with or without any additional OAM configuration.
S203. The MPLS tunnel egress 12 virtual port then removes the top label of the packet. After the top label has been removed, the MPLS tunnel egress virtual port will examine any labels still on the stack. If the new top label (if there is one left after the removal of the old top label) is the GAL label then the packet is sent to the OAM packet processing unit 6 for further processing.
S204. When received by the OAM packet processing 6 unit the Channel Type of the packet is examined. The Channel Type field indicates the type of message carried on the associated control channel. If the Channel Type identifies the packet as a BFD packet, then the packet is sent to the link failure detection unit 7.
S205. The link failure detection unit 7 implements the failure timer for each BFD session in which the OpenFlow switch is involved. Therefore, when the link failure detection unit 7 receives the packet, from the OAM packet processing 6, it performs a lookup in the associative data structure containing all the BFD session information for each link that is provided in the link information database 4 (based on the MEP-ID found in the ACH TLVs). The link failure detection unit 7 updates the associated BFD session data and resets the failure timer for the BFD session.

If the failure timer expires, i.e. a path/link monitored by BFD has failed, the incoming traffic must be redirected to the backup path/link. This is handled by the link failover unit 8 which is notified by the link failure detection unit 7 whenever a failure timer expires. The link failover unit 8 locates the BFD session data associated with the expired failure timer, and identifies the backup BFD session from within the BFD session data. The BFD session data for each LSP includes the flow table rule and MEP-ID of both the working and backup LSPs. By identifying the backup LSP and extracting the associated flow table rule from the link information database 4, the link failover unit 8 can update the flow table 3 by iterating through the flow table 3 looking for output-actions that point to the MPLS Tunnel Ingress virtual port of the current LSP, and replacing the current MPLS Tunnel Ingress virtual port with the identifier of a backup virtual port.

During its lifetime a BFD session will use at least two different transmission timer intervals, one before the session has been established (e.g. larger than 1 second) and another after the BFD session has been established and which depends upon the failure detection resolution required. As such, a particular BFD session must be able to move between different packet generators and Multicast Group Mods when the transmission timer interval changes.

It will be appreciated by the person of skill in the art that various modifications may be made to the above-described embodiments without departing from the scope of the present invention. For example, whilst the above embodiments relate to the use of BFD, other protocols could also be used. For example, it is possible that the methods describer above could also be implemented using the Continuity Check Messages (CCM) defined for Ethernet. In addition, whilst the above embodiments relate to the use of the MPLS-TP in order to carry the BFD data, the BFD packets could be sent in an IP network without the need to make use of MPLS-TP. Furthermore, BFD has two operating modes, asynchronous mode and demand mode, and the methods described above can implement either of these modes. In addition, as an adjunct to both modes, BFD also provides the echo function, wherein a stream of BFD echo packets are transmitted in such a way that the target system loops or echoes these messages back to the sending system through its forwarding path. The methods described above can also implement this echo function.

## Claims

1. An apparatus (1) configured to operate as an OpenFlow switch, the apparatus being **characterized by**:
one or more packet generating virtual ports (9) for generating outgoing link failure detection packets, each packet generating virtual port generating outgoing link failure detection packets with a specified period;
a transmitter (16) for periodically sending the outgoing link failure detection packets on one or more links, each link being used to carry traffic to a peer OpenFlow switch;
a receiver (16) for receiving incoming link failure detection packets over the one or more links from each peer OpenFlow switch;
one or more packet terminating virtual ports (12) for terminating the incoming link failure detection packets;
a link failure detection unit (7) for monitoring the reception of incoming link failure detection packets and for determining that a link has failed if incoming link failure detection packets have not been received on that link for a predefined interval; and
a link failover unit (8) for redirecting traffic intended for a failed link to a backup link by adding or modifying one or more entries in a flow table (3) of the OpenFlow switch.

2. The apparatus of claim 1, and further comprising:
one or more multicast group units (5) each associated with a multicast group, each multicast group being comprised of one or more links that require outgoing link failure detection packets be sent with a specified period; and
the flow table (3) being configured with a plurality of multicast entries, each multicast entry matching outgoing link failure detection packets with a specified period and identifying a multicast group unit that the matching outgoing link failure detection packets should be sent to.

3. The apparatus of claim 2, wherein each multicast group unit (5) is configured to replicate outgoing link failure detection packets generated by a packet generating virtual port (9) such that there is an outgoing link failure detection packet for each of one or more links in the multicast group associated with the multicast group unit.

4. The apparatus of any preceding claim, and further comprising:
a field modifying virtual port (10) for each of the one or more links, the field modifying port inserting link-specific data into one or more fields of the outgoing link failure detection packets.

5. The apparatus of any preceding claim, and further comprising:
a link information database (4) for storing the link-specific information relating to each of the one or more links.

6. The apparatus of any preceding claim, and further comprising:
a packet processing unit (6) for identifying incoming link failure detection packets and for forwarding identified incoming link failure detection packets to the link failure detection unit (7).

7. The apparatus of any preceding claim, wherein the apparatus is configured to send, receive and monitor Bidirectional Forwarding Detection, BFD, packets as link failure detection packets.

8. The apparatus of any preceding claim, wherein the apparatus is configured to send, receive and monitor link failure detection packets sent and received over Multi-protocol Label Switching, MPLS, tunnels as each of the one or more links.

9. The apparatus of claim 8 when dependent upon claim 7, the apparatus further comprising:
for each of the one or more MPLS tunnels, an MPLS tunnel ingress virtual port (11) for assigning an MPLS label on to the outgoing BFD packets.

10. The apparatus of claim 8 when dependent upon claim 7, the apparatus further comprising:
for each of the one or more MPLS tunnels, an MPLS tunnel egress virtual port (12) for removing an MPLS label from any incoming packets and for forwarding the incoming packets to a packet processing unit (6) if the incoming packets have a Generic Associated Channel Label, GAL.

11. The apparatus of any of claims 8 to 10, wherein the flow table (3) is configured with a plurality of MPLS tunnel entries, each MPLS tunnel entry matching incoming packets received on a specific MPLS tunnel and identifying the MPLS tunnel egress virtual port (12) that the matching incoming packets should be sent to.

12. A method of operating an OpenFlow switch, the method being **characterized by**:
configuring the OpenFlow switch with one or more packet generating virtual ports to generate outgoing link failure detection packets, each packet generating virtual port generating outgoing link failure detection packets with a specified period (S101);
configuring the OpenFlow switch with one or more packet terminating virtual ports for terminating the incoming link failure detection packets;
periodically sending the outgoing link failure detection packets on one or more links, each link being used to carry traffic to a peer OpenFlow switch (S105);
receiving incoming link failure detection packets over the one or more links from each peer OpenFlow switch (S201);
monitoring the reception of incoming link failure detection packets (S205);
determining that a link has failed if incoming link failure detection packets have not been received on the link for a predefined interval; and
redirecting traffic intended for a failed link to a backup link by adding or modifying one more entries in a flow table of the OpenFlow switch.

13. The method of claim 12, and further comprising:
configuring the OpenFlow switch with one or more multicast group units each associated with a multicast group, each multicast group being comprised of one or more links that require outgoing link failure detection packets be sent with the specified period.

14. The method of claim 13, and further comprising:
comparing outgoing link failure detection packets to a flow table, the flow table being configured with a plurality of multicast entries, each multicast entry matching outgoing link failure detection packets with a specified period and identifying a multicast group unit (S102); and
sending the outgoing link failure detection packets to the multicast group unit identified in the matching multicast entry.

15. The method of any of claims 13 and 14, and further comprising:
at each multicast group unit, replicating outgoing link failure detection packets generated by a packet generating virtual port such that there is an outgoing link failure detection packet for each of one or more links in the multicast group associated with the multicast group unit (S103).

16. The method of claim 15, and further comprising:
configuring the OpenFlow switch with a field modifying virtual port for each of the one or more links.

17. The method of claim 16, and further comprising:
sending each of the replicated outgoing link failure detection packets to the appropriate field modifying port, and, at the field modifying port, inserting link-specific data into one or more fields of the outgoing link failure detection packets (S104).

18. A computer program comprising computer program code means adapted to operate as an OpenFlow switch and to perform the method of any of claims 12 to 17.

19. A computer program as claimed in claim 18 embodied on a computer readable medium.

## Patentansprüche

1. Vorrichtung (1), dafür konfiguriert, als ein OpenElow-Switch zu arbeiten, wobei die Vorrichtung **gekennzeichnet ist durch**:
einen oder mehrere paketerzeugende virtuelle Ports (9) zum Erzeugen abgehender Verbindungsausfallermittlungspakete, wobei jeder paketerzeugende virtuelle Port abgehende Verbindungsausfallermittlungspakete mit einer festgelegten Periode erzeugt;
einen Sender (16) zum periodischen Senden der abgehenden Verbindungsausfallermittlungspakete auf einer oder mehreren Verbindungen, wobei jede Verbindung verwendet wird, um Verkehr zu einem Partner-OpenFlow-Switch zu befördern;
einen Empfänger (16) zum Empfangen eingehender Verbindungsausfallermittlungspakete über die eine oder mehreren Verbindungen von jedem Partner-OpenFlow-Switch;
einen oder mehrere paketbeendende virtuelle Ports (12) zum Beenden der eingehenden Verbindungsausfallermittlungspakete;
eine Verbindungsausfallermittlungseinheit (7) zum Überwachen des Empfangs von eingehenden Verbindungsausfallermittlungspaketen und zum Bestimmen, dass eine Verbindung ausgefallen ist, wenn auf dieser Verbindung für ein vordefiniertes Intervall keine eingehenden Verbindungsausfallermittlungspakete empfangen worden sind; und
eine Verbindungsausfallsicherungseinheit (8) zum Umleiten von für eine ausgefallene Verbindung vorgesehenem Verkehr zu einer Reserveverbindung **durch** Hinzufügen oder Modifizieren eines oder mehrerer Einträge in einer Flusstabelle (3) des OpenFlow-Switchs.

2. Vorrichtung nach Anspruch 1 und ferner umfassend:
eine oder mehrere Multicastgruppeneinheiten (5), die jeweils einer Multicastgruppe zugeordnet sind, wobei jede Multicastgruppe aus einer oder mehreren Verbindungen besteht, die erfordern, dass abgehende Verbindungsausfallermittlungspakete mit einer festgelegten Periode gesendet werden; und
wobei die Flusstabelle (3) mit einer Vielzahl von Multicasteinträgen konfiguriert ist, wobei jeder Multicasteintrag abgehenden Verbindungsausfallermittlungspaketen mit einer festgelegten Periode entspricht und eine Multicastgruppeneinheit identifiziert, an welche die entsprechenden abgehenden Verbindungsausfallermittlungspakete gesendet werden sollen.

3. Vorrichtung nach Anspruch 2, worin jede Multicastgruppeneinheit (5) dafür konfiguriert ist, durch einen paketerzeugenden virtuellen Port (9) erzeugte abgehende Verbindungsausfallermittlungspakete zu vervielfältigen, sodass es für jede von einer oder mehreren Verbindungen in der Multicastgruppe, die der Multicastgruppeneinheit zugeordnet ist, ein abgehendes Verbindungsausfallermittlungspaket gibt.

4. Vorrichtung nach einem der vorhergehenden Ansprüche und ferner umfassend:
einen feldmodifizierenden virtuellen Port (10) für jede der einen oder mehreren Verbindungen, wobei der feldmodifizierende Port verbindungsspezifische Daten in ein oder mehrere Felder der abgehenden Verbindungsausfallermittlungspakete einfügt.

5. Vorrichtung nach einem der vorhergehenden Ansprüche und ferner umfassend:
eine Verbindungsinformationsdatenbank (4) zum Speichern der verbindungsspezifischen Information bezüglich jeder der einen oder mehreren Verbindungen.

6. Vorrichtung nach einem der vorhergehenden Ansprüche und ferner umfassend:
eine Paketverarbeitungseinheit (6) zum Identifizieren eingehender Verbindungsausfallermittlungspakete und zum Weiterleiten identifizierter eingehender Verbindungsausfallermittlungspakete zur Verbindungsausfallermittlungseinheit (7).

7. Vorrichtung nach einem der vorhergehenden Ansprüche, worin die Vorrichtung dafür konfiguriert ist, Pakete zur bidirektionalen Weiterleitungsermittlung, BFD, als Verbindungsausfallermittlungspakete zu senden, zu empfangen und zu überwachen.

8. Vorrichtung nach einem der vorhergehenden Ansprüche, worin die Vorrichtung dafür konfiguriert ist, Verbindungsausfallermittlungspakete zu senden, zu empfangen und zu überwachen, die über Multiprotokoll-Labelvermittlungs-(MPLS-)Tunnel als jede der einen oder mehreren Verbindungen gesendet und empfangen wurden.

9. Vorrichtung nach Anspruch 8, wenn abhängig von Anspruch 7, wobei die Vorrichtung ferner umfasst:
einen virtuellen MPLS-Tunneleingangsport (11) für jeden der einen oder mehreren MPLS-Tunnel zum Zuweisen eines MPLS-Labels zu den abgehenden BFD-Paketen.

10. Vorrichtung nach Anspruch 8, wenn abhängig von Anspruch 7, wobei die Vorrichtung ferner umfasst:
einen virtuellen MPLS-Tunnelausgangsport (12) für jeden der einen oder mehreren MPLS-Tunnel zum Entfernen eines MPLS-Labels aus jeglichen eingehenden Paketen und zum Weiterleiten der eingehenden Pakete zu einer Paketverarbeitungseinheit (6), wenn die eingehenden Pakete ein generisches zugeordnetes Kanallabel, GAL, haben.

11. Vorrichtung nach einem der Ansprüche 8 bis 10, worin die Flusstabelle (3) mit einer Vielzahl von MPLS-Tunneleinträgen konfiguriert ist, wobei jeder MPLS-Tunneleintrag auf einem spezifischen MPLS-Tunnel empfangenen eingehenden Paketen entspricht und den virtuellen MPLS-Tunnelausgangsport (12) identifiziert, an den die entsprechenden eingehenden Pakete gesendet werden sollen.

12. Verfahren zum Betreiben eines OpenFlow-Switchs, wobei das Verfahren **gekennzeichnet ist durch**:
Konfigurieren des OpenFlow-Switchs mit einem oder mehreren paketerzeugenden virtuellen Ports, um abgehende Verbindungsausfallermittlungspakete zu erzeugen, wobei jeder paketerzeugende virtuelle Port abgehende Verbindungsausfallermittlungspakete mit einer festgelegten Periode erzeugt (S101);
Konfigurieren des OpenFlow-Switchs mit einem oder mehreren paketbeendenden virtuellen Ports zum Beenden der eingehenden Verbindungsausfallermittlungspakete;
periodisches Senden der abgehenden Verbindungsausfallermittlungspakete auf einer oder mehreren Verbindungen, wobei jede Verbindung verwendet wird, um Verkehr zu einem Partner-OpenFlow-Switch zu befördern (S 105);
Empfangen eingehender Verbindungsausfallermittlungspakete über die eine oder mehreren Verbindungen von jedem Partner-OpenFlow-Switch (S201);
Überwachen des Empfangs von eingehenden Verbindungsausfallermittlungspaketen (S205);
Bestimmen, dass eine Verbindung ausgefallen ist, wenn auf der Verbindung für ein vordefiniertes Intervall keine eingehenden Verbindungsausfallermittlungspakete empfangen worden sind; und
Umleiten von für eine ausgefallene Verbindung vorgesehenem Verkehr zu einer Reserveverbindung **durch** Hinzufügen oder Modifizieren eines oder mehrerer Einträge in einer Flusstabelle des OpenFlow-Switchs.

13. Verfahren nach Anspruch 12 und ferner umfassend:
Konfigurieren des OpenFlow-Switchs mit einer oder mehreren Multicastgruppeneinheiten, die jeweils einer Multicastgruppe zugeordnet sind, wobei jede Multicastgruppe aus einer oder mehreren Verbindungen besteht, die erfordern, dass abgehende Verbindungsausfallermittlungspakete mit der festgelegten Periode gesendet werden.

14. Verfahren nach Anspruch 13 und ferner umfassend:
Vergleichen abgehender Verbindungsausfallermittlungspakete mit einer Flusstabelle, wobei die Flusstabelle mit einer Vielzahl von Multicasteinträgen konfiguriert ist, wobei jeder Multicasteintrag abgehenden Verbindungsausfallermittlungspaketen mit einer festgelegten Periode entspricht und eine Multicastgruppeneinheit identifiziert (S 102); und
Senden der abgehenden Verbindungsausfallermittlungspaketen an die im entsprechenden Multicasteintrag identifizierte Multicastgruppeneinheit.

15. Verfahren nach Anspruch 13 und 14 und ferner umfassend:
in jeder Multicastgruppeneinheit erfolgendes Vervielfältigen durch einen paketerzeugenden virtuellen Port erzeugter abgehender Verbindungsausfallermittlungspakete, sodass es für jede von einer oder mehreren Verbindungen in der Multicastgruppe, die der Multicastgruppeneinheit zugeordnet ist, ein abgehendes Verbindungsausfallermittlungspaket gibt (S 103).

16. Verfahren nach Anspruch 15 und ferner umfassend:
Konfigurieren des OpenFlow-Switchs mit einem feldmodifizierenden virtuellen Port (10) für jede der einen oder mehreren Verbindungen.

17. Verfahren nach Anspruch 16 und ferner umfassend:
Senden jedes der vervielfältigten abgehenden Verbindungsausfallermittlungspakete an den passenden feldmodifizierenden virtuellen Port und im feldmodifizierenden virtuellen Port erfolgendes Einfügen verbindungsspezifischer Daten in ein oder mehrere Felder der abgehenden Verbindungsausfallermittlungspakete (S 104).

18. Computerprogramm, umfassend Computerprogrammcodemittel, die dafür eingerichtet sind, als ein OpenFlow-Switch zu arbeiten und das Verfahren nach einem der Ansprüche 12 bis 17 durchzuführen.

19. Computerprogramm nach Anspruch 18, verwirklicht auf einem computerlesbaren Medium.

## Revendications

1. Appareil (1) configuré pour fonctionner comme un commutateur OpenFlow, l'appareil étant **caractérisé en ce qu'**il comprend :
un ou plusieurs ports virtuels de génération de paquets (9) pour générer des paquets de détection de panne de liaison sortante, chaque port virtuel de génération de paquets générant des paquets de détection de panne de liaison sortante avec une période spécifiée ;
un émetteur (16) pour envoyer périodiquement des paquets de détection de panne de liaison sortante sur une ou plusieurs liaisons, chaque liaison étant utilisée pour transporter un trafic vers un commutateur OpenFlow homologue ;
un récepteur (16) pour recevoir des paquets de détection de panne de liaison entrante sur ladite ou lesdites liaisons depuis chaque commutateur OpenFlow homologue ;
un ou plusieurs ports virtuels de terminaison de paquets (12) pour mettre fin aux paquets de détection de panne de liaison entrante ;
une unité de détection de panne de liaison (7) pour surveiller la réception des paquets de détection de panne de liaison entrante et pour déterminer qu'une liaison est en panne si des paquets de détection de panne de liaison entrante n'ont pas été reçus sur cette liaison pendant un intervalle prédéfini ; et
une unité de basculement de liaison (8) pour rediriger un trafic destiné à une liaison en panne sur une liaison de secours en ajoutant ou en modifiant une ou plusieurs entrées d'une table de flux (3) du commutateur OpenFlow.

2. Appareil selon la revendication 1, comprenant en outre :
une ou plusieurs unités de groupes de multidiffusion (5) associées chacune à un groupe de multidiffusion, chaque groupe de multidiffusion se composant d'une ou plusieurs liaisons qui nécessitent que les paquets de détection de panne de liaison sortante soient envoyés avec une période spécifiée ; et
la table de flux (3) étant configurée avec une pluralité d'entrées de multidiffusion, chaque entrée de multidiffusion correspondant à des paquets de détection de panne de liaison sortante avec une période spécifiée et identifiant une unité de groupe de multidiffusion à laquelle les paquets de détection de panne de liaison sortante correspondants doivent être envoyés.

3. Appareil selon la revendication 2, dans lequel chaque unité de groupe de multidiffusion (5) est configurée pour reproduire les paquets de détection de panne de liaison sortante générés par un port virtuel de génération de paquets (9) de sorte qu'il existe un paquet de détection de panne de liaison sortante pour chacune des une ou plusieurs liaisons du groupe de multidiffusion associé à l'unité de groupe de multidiffusion.

4. Appareil selon l'une quelconque des revendications précédentes, et comprenant en outre :
un port virtuel de modification de champ (10) pour chacune des une ou plusieurs liaisons, le port de modification de champ introduisant des données spécifiques à une liaison dans un ou plusieurs champs des paquets de détection de panne de liaison sortante.

5. Appareil selon l'une quelconque des revendications précédentes, et comprenant en outre :
une base de données d'information sur les liaisons (4) pour stocker les informations spécifiques à une liaison relatives à chacune des une ou plusieurs liaisons.

6. Appareil selon l'une quelconque des revendications précédentes, et comprenant en outre :
une unité de traitement de paquets (6) pour identifier des paquets de détection de panne de liaison entrante et pour transférer les paquets de détection de panne de liaison entrante identifiés à l'unité de détection de panne de liaison (7).

7. Appareil selon l'une quelconque des revendications précédentes, dans lequel l'appareil est configuré pour envoyer, recevoir et surveiller les paquets de détection de transfert bidirectionnel, BFD, comme des paquets de détection de panne de liaison.

8. Appareil selon l'une quelconque des revendications précédentes, dans lequel l'appareil est configuré pour envoyer, recevoir et surveiller les paquets de détection de panne de liaison envoyés et reçus sur des tunnels de commutation multiprotocole par étiquette, MPLS, comme chacune des une ou plusieurs liaisons.

9. Appareil selon la revendication 8 lorsqu'elle dépend de la revendication 7, l'appareil comprenant en outre :
pour chacun des un ou plusieurs tunnels MPLS, un port virtuel d'entrée de tunnel MPLS (11) pour attribuer une étiquette MPLS aux paquets BFD sortants.

10. Appareil selon la revendication 8 en liaison avec la revendication 7, l'appareil comprenant en outre :
pour chacun des un ou plusieurs tunnels MPLS, un port virtuel de sortie de tunnel MPLS (12) pour supprimer une étiquette MPLS de l'un quelconque des paquets entrants et pour transférer les paquets entrants à une unité de traitement de paquets (6) si les paquets entrants ont une étiquette de canal associé générique, GAL.

11. Appareil selon l'une quelconque des revendications 8 à 10, dans lequel la table de flux (3) est configurée avec une pluralité d'entrées de tunnel MPLS, chaque entrée de tunnel MPLS correspondant à des paquets entrants reçus sur un tunnel MPLS spécifique et identifiant le port virtuel de sortie du tunnel MPLS (12) auquel les paquets entrants correspondants doivent être envoyés.

12. Procédé de commande d'un commutateur OpenFlow, le procédé étant **caractérisé en ce qu'**il comprend :
la configuration du commutateur OpenFlow avec un ou plusieurs ports virtuels de génération de paquets pour générer des paquets de détection de panne de liaison sortante, chaque port virtuel de génération de paquets générant des paquets de détection de panne de liaison sortante avec une période spécifiée (S 101) ;
la configuration du commutateur OpenFlow avec un ou plusieurs ports virtuels de terminaison de paquets pour mettre fin aux paquets de détection de panne de liaison entrante ;
l'envoi périodique des paquets de détection de panne de liaison sortante sur une ou plusieurs liaisons, chaque liaison étant utilisée pour transporter un trafic vers un commutateur OpenFlow homologue (S105) ;
la réception de paquets de détection de panne de liaison entrante sur ladite ou lesdites liaisons depuis chaque commutateur OpenFlow homologue (S201) ;
la surveillance de la réception des paquets de détection de panne de liaison entrante (S205) ;
la détermination d'une panne de liaison si des paquets de détection de panne de liaison entrante n'ont pas été reçus sur la liaison pendant un intervalle prédéfini ; et
le réacheminement d'un trafic destiné à une liaison en panne sur une liaison de secours par ajout ou modification d'une ou plusieurs entrées dans une table de flux du commutateur OpenFlow.

13. Procédé selon la revendication 12, et comprenant en outre :
la configuration du commutateur OpenFlow avec une ou plusieurs unités de groupes de multidiffusion associées chacune à un groupe de multidiffusion, chaque groupe de multidiffusion se composant d'une ou plusieurs liaisons qui nécessitent que les paquets de détection de panne de liaison sortante soient envoyés avec la période spécifiée.

14. Procédé selon la revendication 13, et comprenant en outre :
la comparaison des paquets de détection de panne de liaison sortante à une table de flux, la table de flux étant configurée avec une pluralité d'entrées de multidiffusion, chaque entrée de multidiffusion correspondant à des paquets de détection de panne de liaison sortante avec une période spécifiée et identifiant une unité de groupe de multidiffusion (S 102) ; et
l'envoi des paquets de détection de panne de liaison sortante à l'unité de groupe de multidiffusion identifiée dans l'entrée de multidiffusion correspondante.

15. Procédé selon l'une quelconque des revendications 13 et 14, et comprenant en outre :
au niveau de chaque unité de groupe de multidiffusion, la reproduction des paquets de détection de panne de liaison sortante générés par un port virtuel de génération de paquets de sorte qu'il existe un paquet de détection de panne de liaison sortante pour chacune des une ou plusieurs liaisons du groupe de multidiffusion associé à l'unité de groupe de multidiffusion (S 103).

16. Procédé selon la revendication 15, et comprenant en outre :
la configuration du commutateur OpenFlow avec un port virtuel de modification de champ pour chacune des une ou plusieurs liaisons.

17. Procédé selon la revendication 16, et comprenant en outre :
l'envoi de chacun des paquets de détection de panne de liaison sortante reproduits au port de modification de champ approprié et, au niveau du port de modification de champ, l'introduction de données spécifiques à une liaison dans un ou plusieurs champs des paquets de détection de panne de liaison sortante (S 104).

18. Programme informatique comprenant des moyens de code de programme informatique aptes à fonctionner comme un commutateur OpenFlow et à effectuer le procédé selon l'une quelconque des revendications 12 à 17.

19. Programme informatique selon la revendication 18, mis en oeuvre sur un support lisible par un ordinateur.
